# EUROPEAN PATENT APPLICATION

(11) **EP 3 239 865 A1**
(43) Date of publication of application: **01.11.2017**
(21) Application number: 17159087.0
(22) Date of filing: 03.03.2017
(51) Int. Cl.: G06F 17/50

(54) **METHOD FOR ANALYZING IR DROP AND ELECTROMIGRATION OF IC**

(30) Priority: 25.04.2016 US 201662326896 P; 22.02.2017 US 201715438844
(71) Applicant: MediaTek Inc., Hsin-Chu 300 (TW)
(72) Inventor: CHEN, Chun-Liang, 302 Hsinchu County (TW)
(74) Representative: Goddar, Heinz J.

(57) **Abstract**

A method for analyzing IR drop and EM of an IC is provided. A layout of an IC is obtained, wherein the layout is divided into a plurality of blocks, and each of the blocks corresponds to a specific function. Power-related information of the blocks is obtained. A specific operation power and a specific operation temperature are obtained according to the power-related information of each of the blocks. Each of the blocks is verified according to the corresponding specific operation power and the corresponding specific operation temperature.

## Description

### CROSS REFERENCE TO RELATED APPLICATIONS

This application claims the benefit of U.S. Provisional Application No. 62/326,896, filed on April 25, 2016, the entirety of which is incorporated by reference herein.

### BACKGROUND OF THE INVENTION

### Field of the Invention

The invention relates to a method for analyzing IR drop and electromigration (EM) of an integrated circuit (IC), and more particularly to a method for analyzing IR drop and electromigration (EM) of each block of an IC.

### Description of the Related Art

In recent years, the development process for integrated circuits (ICs) such as super larger scale integrated circuits (LSIs) has generally employed computer assisted design (CAD). According to this CAD-based development process, abstract circuit data, which corresponds to the functions of an integrated circuit to be developed, is defined by using so-called hardware description language (HDL), and the defined circuit is used to form a concrete circuit structure to be mounted on a chip.

Before the IC chips are manufactured (or implemented), the placements, the floor plans, and the layout areas of the IC chips are first considered so as to determine a die size for each IC chip. In general, the die size will affect the manufacturing cost of the IC chip. Therefore, it is desirable to minimize the layout area of the IC chip.

### BRIEF SUMMARY OF THE INVENTION

Methods for analyzing IR drop and electromigration (EM) of an integrated circuit (IC) and a non-transitory computer-readable storage medium storing instructions are provided. An embodiment of a method for analyzing IR drop and EM of an IC is provided. The layout of an IC is obtained, wherein the layout is divided into a plurality of blocks, and each of the blocks corresponds to a specific function. Power-related information of the blocks is obtained. A specific operation power and a specific operation temperature are obtained according to the power-related information of each of the blocks. Each of the blocks is verified according to the corresponding specific operation power and the corresponding specific operation temperature.

Furthermore, another embodiment of a method for analyzing IR drop and electromigration (EM) of an integrated circuit (IC) is provided. The layout of an IC is obtained, wherein the layout is divided into a plurality of blocks and each of the blocks corresponds to a specific function. A plurality of operation powers and a plurality of operation temperatures are obtained according to power-related information of the blocks, wherein each of the blocks has an individual operation power and an individual operation temperature. Each of the blocks is verified with the individual operation power and the individual operation temperature. The layout is adjusted when an IR drop violation or an EM violation is present in one of the verified blocks.

Moreover, an embodiment is provided of a non-transitory computer-readable storage medium storing instructions that, when executed by a computer, cause the computer to perform a method for analyzing IR drop and electromigration (EM) of an integrated circuit (IC). The layout of an IC is obtained, wherein the layout is divided into a plurality of blocks and each of the blocks corresponds to a specific function. Power-related information of the blocks is obtained. A specific operation power and a specific operation temperature are obtained according to the power-related information of each of the blocks. The blocks are simultaneously verified according to the corresponding operation powers and the corresponding operation temperatures.

A detailed description is given in the following embodiments with reference to the accompanying drawings.

### BRIEF DESCRIPTION OF DRAWINGS

The invention can be more fully understood by reading the subsequent detailed description and examples with references made to the accompanying drawings, wherein:
FIG. 1 shows a flow chart illustrating a typical hierarchical design process of an integrated circuit (IC);
FIG. 2 shows a method for analyzing IR drop and electromigration (EM) of an integrated circuit (IC) according to an embodiment of the invention, wherein the method of FIG. 2 is performed by a computer capable of operating an electronic design automation (EDA) tool;
FIG. 3 shows an example illustration of the layout of an IC; and
FIG. 4 shows a computer system according to an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

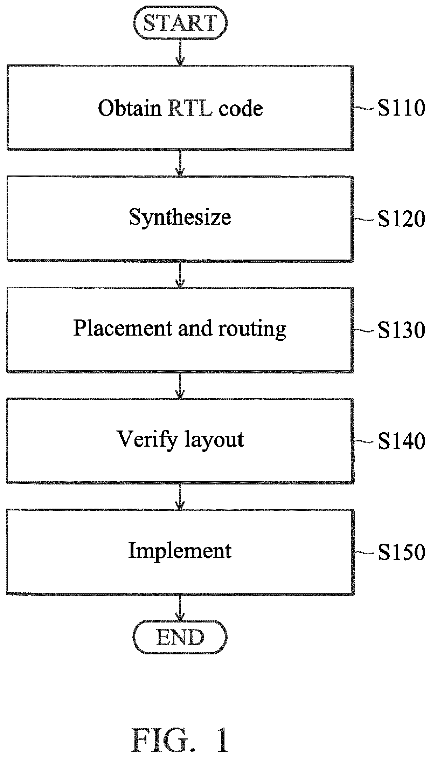

FIG. 1 shows a flow chart illustrating a typical hierarchical design process of an integrated circuit (IC). First, in step S110, a register-transfer level (RTL) code describing the function performed by the IC is obtained. Next, in step S120, the RTL code is synthesized to generate gates for the IC. In general, the IC comprises a plurality of blocks, and each block provides a significant function for the IC, such as a specific processor (e.g. an application processor, a video processor, an audio processor, or a controller), a memory (e.g. a SRAM module) and so on. Furthermore, each block has a corresponding RTL code, and then the RTL code of each block is synthesized to generate the gates of the block. Next, in step S130, a placement and routing procedure is performed to generate a layout of whole blocks within a chip area of the IC. For example, assuming that the IC comprises N blocks, N placements of the N blocks will have been generated according to the RTL codes of the blocks, respectively. Thus, according to the N placements of the N blocks and the gates that do not belong to the N blocks, a chip placement and routing procedure is performed and a layout is obtained. In some embodiments, the layout is a whole chip layout. In some embodiments, the layout is a portion of a whole chip layout regarding some digital circuits of the IC. Next, an analysis procedure is performed and the layout is verified to check whether the layout violates any of the various constraints or rules (step S140). If there are no violations in the layout, the IC is fabricated (or implemented) according to the layout (step S150). If a violation is present in the layout, the layout of the IC must be modified to handle the violation until no violations are present.

In the analysis procedure, structural data such as parasitic resistance and capacitance values is obtained according to the layout. Furthermore, a post-layout simulation is performed to ensure proper functionality. Post-layout simulation is used to predict the IC's true performance, by rigorously testing the actual loading of the circuits and power-bus lines. According to the results obtained in the post-layout simulation, some problems can be uncovered such as excessive power-bus voltage drop (e.g. IR drop) and electromigration (EM), which are generally not discoverable during RTL simulation.

In general, EM refers to the dislodging of ions from a metal wire of the IC. When electrons flowing through a wire randomly collide into the atoms of the wire, the atoms are carried along the path of the electrons, thus causing wire deterioration. Furthermore, EM causes a gradual thinning out of the wire, and EM may lead to voltage drop across a wire, and eventually to a break in the wire. Specifically, EM is caused by current density (current flow divided by the width of the metal) exceeding a threshold value. For example, EM is generally most pronounced in thin wires with a relatively large amount of current flow (high current density). EM impedes the ability of metal to conduct, thereby reducing lifespan. Accordingly, if current density of a metal wire exceeds a specific threshold value, an EM violation is present in the metal wire of the layout of the IC. If the EM violation cannot be ignored, a correction is performed to address the EM violation.

IR (or voltage) drop generally refers to a difference in voltage from a supply voltage (e.g. Vdd) at a power node and is usually caused by the resistance (either due to parasitic resistance or due to other devices in the metal wire) present between a voltage source (providing the supply voltage) and the power node. Therefore, devices connected to nodes other than the power node may receive a terminal voltage, which is less than the supply voltage. If the terminal voltage is less than a permissible threshold voltage, the devices may not operate in a normal mode. For example, a circuit may become non-operational or operate at a lower frequency (compared to an optimal frequency). Accordingly, if the voltage drop exceeds a specific threshold voltage, an IR drop violation is present in the metal wire of the layout of the IC. Similarly, if the IR drop violation cannot be ignored, a correction is performed to address the IR drop violation. Furthermore, IR drop at each node of the layout and current flow on each path may be determined by performing a simulation. The determined values may be used to ensure that the design is in conformity with various EM and IR drop requirements.

In the analysis procedure, after no EM or IR drop violation that cannot be ignored is present, a design rule check (DRC) is performed on the layout to determine if there is a violation of the design rules associated with a given process. After the DRC successes, a layout-versus-schematic (LVS) is performed, so as to determine whether the layout corresponds to the original schematic, circuit diagram or RTL code of the IC design. As described above, after the layout is verified completely, a plurality of ICs are fabricated according to the layout.

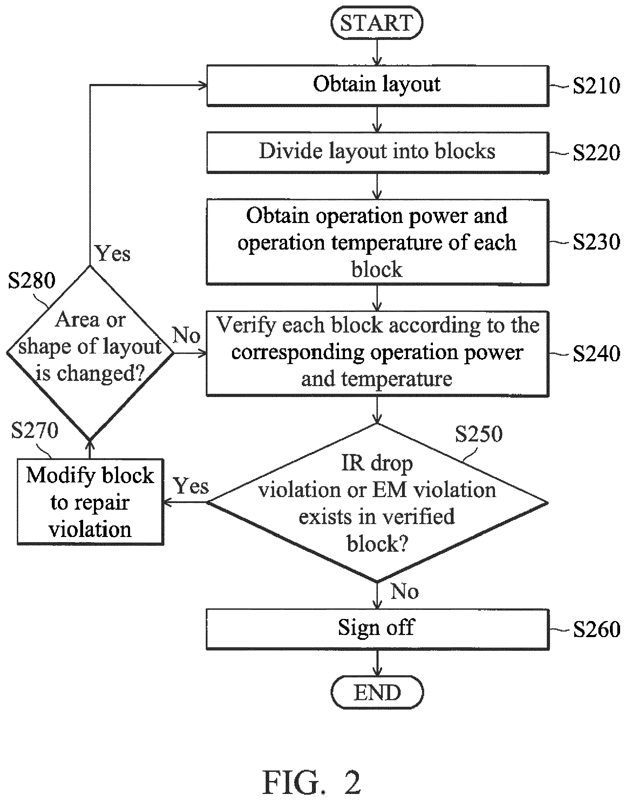

FIG. 2 shows a method for analyzing IR drop and electromigration (EM) of an integrated circuit (IC) according to an embodiment of the invention, wherein the method of FIG. 2 is performed by a computer capable of operating an electronic design automation (EDA) tool. First, in step S210, a processor of the computer obtains a layout of the IC, and the layout can be displayed in a graphical user interface (GUI). Next, in step S220, the processor divides the layout into a plurality of blocks according to circuit function information of the IC, and each block corresponds to a significant function for the IC, such as a specific processor (e.g. an application processor, a video processor, an audio processor, or a controller), a memory (e.g. a SRAM module) and so on. Next, in step S230, the processor obtains information regarding a plurality of operation powers (voltages and currents) of the blocks and a plurality of operation temperatures of the blocks according to power-related information of the blocks, wherein each block has an individual operation power (voltage and current) and an individual operation temperature. In some embodiments, the individual operation power and the individual operation temperature are the maximum operation power and the maximum operation temperature for the block. In some embodiments, the individual operation power and the individual operation temperature are determined according to the power consumption of the block. Next, the processor verifies each block with the individual operation power and the individual operation temperature corresponding to the verified block (step S240), so as to check whether an IR drop violation or an EM violation exists in the verified block (step S250). In some embodiments, the blocks are verified simultaneously. In some embodiments, the blocks are verified in a specific order. If the IR drop violation or the EM violation exists in the verified block and the violation cannot be ignored, the processor modifies the block to repair the violation (step S270), and then the layout of the IC is changed. In some embodiments, the processor modifies the block in the layout, so as to increase the widths of the wires corresponding to the violation in the block. In some embodiments, the processor may increase the area of the layout or change the shape of the layout, so as to repair the violation. After the block has been modified and the area or shape of the layout has not been changed (S280), the modified block is verified again (step S240). If the area or shape of the layout is changed, the method is performed again from step S210. Conversely, if no IR drop violation or EM violation exists in the verified block or the violation can be ignored, the layout is signed off (step S260) to perform subsequent procedures, such as DRC or LVS.

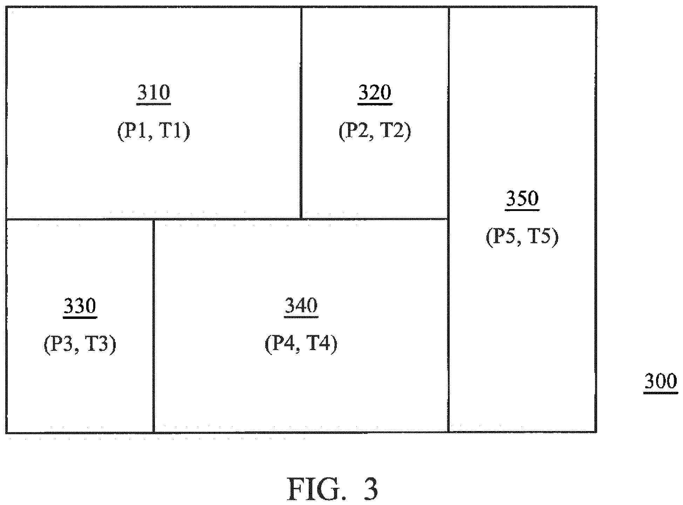

FIG. 3 shows an example illustration of the layout 300 of an IC. After obtaining circuit function information of the IC, the layout 300 is divided into a plurality of blocks 310-350 (step S220). After obtaining power-related information of the blocks 310-350 of the IC 300, each operation power (voltage and current) and each operation temperature are obtained for each of the blocks 310-350. For example, block 310 has a first operation power P1 and a first operation temperature T1, block 320 has a second operation power P2 and a second operation temperature T2, block 330 has a third operation power P3 and a third operation temperature T3, block 340 has a fourth operation power P4 and a fourth operation temperature T4, and block 350 has a fifth operation power P5 and a fifth operation temperature T5. In some embodiments, the operation powers P1-P5 and the operation temperatures T1-T5 of the blocks 310-350 are the maximum operation powers and the maximum operation temperatures for each block. In general, the maximum operation power and the maximum operation temperature are determined according to the number of gates in the block and the operation frequencies of the gates. Due to the number of gates and the operation frequencies of the gates being different from that of the other blocks, the operation powers and the operation temperatures of the blocks 310-350 may also be different. By verifying each block with the corresponding power and the corresponding temperature, each wire of the block can be optimized, such as the width of each power wire having the smallest value, thereby each block of the layout can be minimized in terms of layout area.

For a conventional analysis procedure that uses a maximum operation power of the whole blocks and a maximum operation temperature of the whole blocks to verify whole blocks in a layout, the widths of the power wires of each block will be limited by the maximum operation power of the whole blocks and the maximum operation temperature of the whole blocks. Compared to the conventional analysis procedure, the method that uses the corresponding operation power and the corresponding operation temperature of the block to verify each block can minimize the size of the layout and decrease design manpower and cost. For example, the width of each wire of each block can be optimized, especially the power wires in the block.

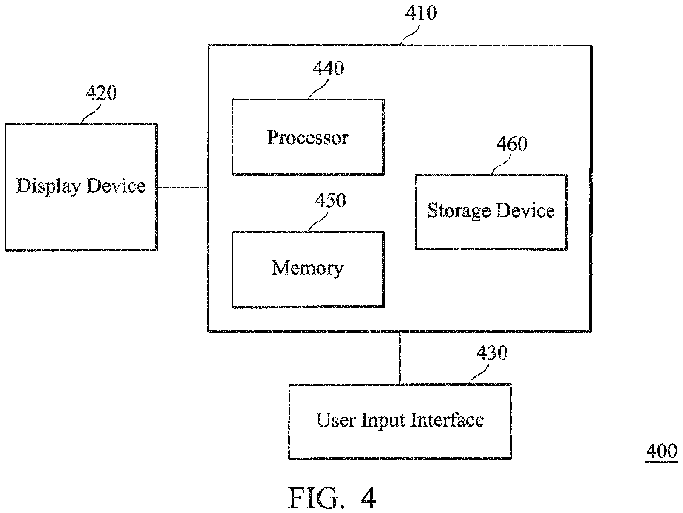

FIG. 4 shows a computer system 400 according to an embodiment of the invention. The computer system 400 comprises a computer 410, a display device 420 and a user input interface 430, wherein the computer 410 comprises a processor 440, a memory 450, and a storage device 460. The computer 410 is coupled to the display device 420 and the user input interface 430, wherein the computer 410 is capable of operating an electronic design automation (EDA) tool. Furthermore, the computer 410 is capable of receiving input instructions or information (e.g. circuit function information and power-related information) from the user input interface 430 and displaying the layout of the IC and the blocks of the layout on the display device 420. In one embodiment, the display device 420 is a GUI for the computer 410. Furthermore, the display device 420 and the user input interface 430 can be implemented in the computer 410. The user input interface 430 may be a keyboard, a mouse, and so on. In the computer 410, the storage device 460 can store the operating systems (OSs), applications, information (e.g. circuit function information and power-related information) and data that comprise input required by the applications and/or output generated by applications. The processor 440 of the computer 410 can perform one or more operations (either automatically or with user input) in any method that is implicitly or explicitly described in this disclosure. For example, during an operation, the processor 440 can load the applications of the storage device 460 into the memory 450, and then the applications can be used by the user to create, view, and/or edit a placement, a floor plan and a physical layout for a circuit design.

The data structures and code described in this disclosure can be partially or fully stored on a computer-readable storage medium and/or a hardware module and/or hardware apparatus. A computer-readable storage medium may be, but is not limited to, volatile memory, non-volatile memory, magnetic and optical storage devices such as disk drives, magnetic tape, CDs (compact discs), DVDs (digital versatile discs or digital video discs), or other media, now known or later developed, that are capable of storing code and/or data. Examples of hardware modules or apparatuses described in this disclosure include, but are not limited to, application-specific integrated circuits (ASICs), field-programmable gate arrays (FPGAs), dedicated or shared processors, and/or other hardware modules or apparatuses now known or later developed.

The methods and processes described in this disclosure can be partially or fully embodied as code and/or data stored in a computer-readable storage medium or device, so that when a computer system reads and executes the code and/or data, the computer system performs the associated methods and processes. The methods and processes can also be partially or fully embodied in hardware modules or apparatuses, so that when the hardware modules or apparatuses are activated, they perform the associated methods and processes. Note that the methods and processes can be embodied using a combination of code, data, and hardware modules or apparatuses.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method for analyzing IR drop and electromigration (EM) of an integrated circuit (IC), comprising:
obtaining a layout of an IC, wherein the layout is divided into a plurality of blocks and each of the blocks corresponds to a specific function;
obtaining power-related information of the blocks;
obtaining a specific operation power and a specific operation temperature according to the power-related information of each of the blocks; and
verifying each of the blocks according to the corresponding specific operation power and the corresponding specific operation temperature.

2. The method as claimed in claim 1, further comprising:
checking whether an IR drop violation or an EM violation is present when each of the blocks is verified.

3. The method of claim 2, further comprising:
adjusting the layout when the IR drop violation or the EM violation is present in the verified block.

4. The method as claimed in claim 3, wherein the step of adjusting the layout when the IR drop violation or the EM violation is present in the verified block further comprises:
increasing width of at least one wire of the verified block corresponding to the IR drop violation or the EM violation.

5. The method as claimed in claim 4, further comprising:
re-verifying the block with the increased width of the at least one wire according to the corresponding operation power and the corresponding operation temperature.

6. The method as claimed in one of the preceding claims, further comprising:
fabricating the IC according to the layout when no IR drop violation or no EM violation is present in each of the blocks.

7. The method as claimed in one of the preceding claims, wherein the specific operation power and the specific operation temperature are determined according to a power consumption of the corresponding block.

8. The method as claimed in one of the preceding claims, wherein the specific operation power and the specific operation temperature of the block are different from that of the other blocks.

9. The method as claimed in one of the preceding claims, wherein the specific functions of the blocks are different.

10. A non-transitory computer-readable storage medium storing instructions that, when executed by a computer, cause the computer to perform the method of one of the preceding claims.
